(19)

Europäisches
Patentamt
European
Patent Office
Office européen
des brevets

(11) **EP 2 961 168 A1**

(12) **EUROPEAN PATENT APPLICATION**

(43) Date of publication:
**30.12.2015 Bulletin 2015/53**

(51) Int Cl.:
**H04N 19/50** $^{(2014.01)}$ **H04N 19/51** $^{(2014.01)}$
**H04N 19/593** $^{(2014.01)}$ **H04N 19/46** $^{(2014.01)}$
**H04N 19/98** $^{(2014.01)}$ **H04N 19/186** $^{(2014.01)}$

(21) Application number: **14306029.1**

(22) Date of filing: **27.06.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing**
**92130 Issy-les-Moulineaux (FR)**

(72) Inventors:
• **Leleannec, Fabrice**
**35 576 Cesson Sévigné (FR)**

• **Lasserre, Sebastien**
**35 576 Cesson Sévigné (FR)**
• **Thoreau, Dominique**
**35 576 Cesson Sévigné (FR)**

(74) Representative: **Browaeys, Jean-Philippe**
**Technicolor**
**1, rue Jeanne d'Arc**
**92443 Issy-les-Moulineaux (FR)**

(54) **Method and apparatus for predicting image samples for encoding or decoding**

(57)     A method of encoding or decoding at least part of a high dynamic range image, the image being defined in a perceptual space of high dynamic range having a luminance component and a color difference metric, the method comprising for a segment of the at least part of the image: converting reference samples for prediction of the segment into the LDR space of the segment to be predicted, the reference samples having been previously reconstructed in their associated LDR space, and predicting the segment using the converted reference samples, for encoding or decoding of the segment using an encoding or decoding technique applicable to an LDR image.

**FIG. 1**

Printed by Jouve, 75001 PARIS (FR)

EP 2 961 168 A1

**Description**

TECHNICAL FIELD

The present invention relates to a method and an apparatus for predicting image data for an encoding or decoding process. Particularly, but not exclusively, the invention relates to prediction of image data for encoding and decoding of video data for High Dynamic Range (HDR) applications.

BACKGROUND

The variation of light in a scene captured by an imaging device can vary greatly. For example, objects located in a shadow of the scene can appear very dark compared to an object illuminated by direct sunlight. The limited dynamic range and colour gamut provided by traditional low dynamic range (LDR) images do not provide a sufficient range for accurate reproduction of the changes in luminance and colour within such scenes. Typically the values of components of LDR images representing the luminance or colour of pixels of the image are represented by a limited number of bits (typically 8, 10 or 12 bits). The limited range of luminance provided by such representation does not enable small signal variations to be effectively reproduced, in particular in bright and dark ranges of luminance.

High dynamic range imaging (also referred to as HDR or HDRI) enables a greater dynamic range of luminance between light and dark areas of a scene compared to traditional LDR images. This is achieved in HDR imaging by extending the signal representation to a wider dynamic range in order to provide high signal accuracy across the entire range. In HDR images, component values of pixels are usually represented with a greater number of bits (for example from 16 bits to 64 bits) including in floating-point format (for example 32-bit or 16-bit for each component, namely float or half-float), the most popular format being openEXR half-float format (16-bit per RGB component, i.e. 48 bits per pixel) or in integers with a long representation, typically at least 16 bits. Such ranges correspond to the natural sensitivity of the human visual system. In this way HDR images more accurately represent the wide range of luminance found in real scenes thereby providing more realistic representations of the scene.

Because of the greater range of values provided, however, HDR images consume large amounts of storage space and bandwidth, making storage and transmission of HDR images and videos problematic. Efficient coding techniques are therefore required in order to compress the data into smaller, more manageable data sizes. Finding suitable coding/decoding techniques to effectively compress HDR data while preserving the dynamic range of luminance for accurate rendering has proved challenging.

A typical approach for encoding an HDR image is to reduce the dynamic range of the image in order to encode the image by means of a traditional encoding scheme used to encode LDR images.

For example in one such technique, a tone-mapping operator is applied to the input HDR image and the tone-mapped image is then encoded by means of a conventional 8-10 bit depth encoding scheme such as JPEG/JPEG200 or MPEG-2, H.264/AVC for video (Karsten Suhring, H.264/AVC Reference Software, http://iphome.hhi.de/suehring/tml/download/, the book of I. E. Richardson titled « H.264 and MPEG-4 video compression » published in J. Wiley & Sons in September 2003). An inverse tone-mapping operator is then applied to the decoded image and a residual is calculated between the input image and the decoded and inverse-tone-mapped image. Finally, the residual is encoded by means of a second traditional 8-10 bit-depth encoder scheme.

The main drawbacks of this first approach are the use of two encoding schemes and the limitation of the dynamic range of the input image to twice the dynamic range of a traditional encoding scheme (16-20 bits). According to another approach, an input HDR image is converted in order to obtain a visually lossless representation of the image pixels in a colour space in which values belong to a dynamic range which is compatible with a traditional 8-10 or an extended 12, 14 or 16 bits depth encoding scheme such as HEVC for example (B. Bross, W.J. Han, G. J. Sullivan, J.R. Ohm, T. Wiegand JCTVC-K1003, "High Efficiency Video Coding (HEVC) text specification draft 9," Oct 2012) and its high bit-depth extensions. Even if traditional codecs can operate high pixel (bit) depths it is generally difficult to encode at such bit depths in a uniform manner throughout the image because the ratio of compression obtained is too low for transmission applications.

Other approaches using coding techniques applicable to LDR images result in artifacts in the decoded image. The present invention has been devised with the foregoing in mind.

SUMMARY

According to a first aspect of the invention there is provided a method of encoding or decoding at least part of a high dynamic range image, the image being defined in a color space of high dynamic range, the method comprising for a segment of the at least part of the image: converting reference samples for prediction of the segment into a local LDR space of the segment to be predicted, the reference samples having been previously reconstructed in their associated local LDR space, and predicting the segment using the converted reference samples, for encoding or decoding of the segment using an encoding or decoding technique applicable to an LDR image.

In an embodiment the conversion of the reference samples comprises:

scaling of the reference samples from their respective reconstructed LDR space to a local perceptual space of high dynamic range;

reconstruction of the scaled reference samples in the original HDR space of the image;

mapping of the reconstructed scaled reference samples to the local perceptual space of the segment to be predicted; and

reduction of the dynamic range of the converted reference samples to the LDR space used for encoding/decoding of the segment to be predicted.

In an embodiment, the reconstruction of the scaled samples in the original HDR space is dependent upon common representative luminance components respectively associated with the reference samples.

In an embodiment, the mapping of the reconstructed scaled samples to the local HDR space of the segment to be predicted is dependent upon a common representative luminance component value associated with the segment to be predicted.

In an embodiment, a said common representative luminance component value for a reference sample is obtained based on the luminance values of the image samples of an image segment to which the reference sample belongs.

In an embodiment, the common representative luminance component value for the segment to be predicted is obtained based on the luminance values of the image samples of the said segment.

In an embodiment the method includes encoding the segment of the at least part of the image using an encoding process applicable to a low dynamic range (LDR) image by applying a coding parameter set including at least one coding parameter; reconstructing the encoded segment in the space of high dynamic range; evaluating a rate distortion cost for the encoded segment in the space of high dynamic range; and adjusting said coding parameter set for the encoding process of the segment based on the evaluated rate distortion cost.

In an embodiment, evaluating the rate distortion cost comprises evaluating the rate associated with encoding of the common representative component value of the segment to be encoded.

In an embodiment, the image segment to be predicted is represented in a local perceptual space of high dynamic range based on the corresponding common representative luminance component value prior to encoding of the segment.

In an embodiment, the method includes obtaining for the segment to be predicted at least one local residual luminance component in a local space of low dynamic range, said at least one local residual luminance component corresponding to the differential between the corresponding luminance component of the original image and the common representative luminance value of the segment.

In an embodiment, the method includes obtaining for the segment at least one image portion in the local perceptual space, said at least one image portion corresponding to the local residual luminance component or the color component of the image portion, normalized according to the at least one common representative luminance value of the segment.

In an embodiment, evaluating the rate distortion cost comprises evaluating the rate associated with encoding of the said at least one image portion.

In an embodiment, evaluating the rate distortion cost comprises evaluating the distortion associated with reconstruction of the encoded segment in the perceptual space of high dynamic range.

In an embodiment, the method includes performing virtual lossless refinement between samples of the residual image portion reconstructed in the local perceptual space and samples of the original texture and the corresponding samples of the said image.

A second aspect of the invention provides an encoding device for encoding at least part of an image of high dynamic range defined in a perceptual space having a luminance component and a color difference metric, the device comprising: a reference sample converter for converting reference samples for prediction of the segment into the LDR space of an image segment to be predicted, the reference samples having been previously reconstructed in their associated LDR space, and a prediction module for predicting the segment using the converted reference samples, an encoder for encoding the segment using an encoding technique applicable to an LDR image.

The encoding device according to the second aspect of the invention may be configured to perform the method of any one of claims 2 to 13.

A third aspect of the invention provides a decoding device for decoding at least part of an image of high dynamic range defined in a perceptual space having a luminance component and a color difference metric, the device comprising:

a decoder for decoding an image segment using an decoding technique applicable to an LDR image.

a reference sample converter for converting reference samples for prediction of the segment into the LDR space of the segment to be predicted, the reference samples having been previously reconstructed in their associated LDR space, and

a prediction module for predicting the segment using the converted reference samples.

In the third or fourth aspect of the invention, the reference sample converter is configured to scale the reference samples from their respective reconstructed LDR space to a local perceptual space of high dynamic range;

reconstruct the scaled reference samples in the original HDR space of the image;

map the reconstructed scaled reference samples to the local perceptual space of the segment to be predicted; and

perform reduction of the dynamic range of the converted reference samples to the LDR space used for encoding/decoding of the segment to be predicted.

Embodiments of the invention provide encoding and decoding methods for high dynamic range image data for a wide range of applications providing improved visual experience.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RE signal.

BRIEF DESCRIPTION OF THE DRAWINGS

Embodiments of the invention will now be described, by way of example only, and with reference to the following drawings in which:

FIG. 1 is a block diagram of an encoding process according to a first embodiment of the invention;
FIG. 2 is a schematic diagram illustrating an example of decomposition of a coding unit into prediction units and transform units according to the HEVC video compression standard;
FIG. 3 is a schematic diagram illustrating examples of intra prediction methods;
FIG. 4 is a flow chart of a reference sample conversion process according to an embodiment of the invention;
FIG. 5 is a block diagram illustrating an example of intra prediction in accordance with an embodiment of the invention;
FIG. 6 is a block diagram illustrating an example of inter prediction in accordance with an embodiment of the invention;
FIG. 7 is a block diagram of an encoding process according to a further embodiment of the invention;
FIG. 8 is a block diagram of an encoding process according to a further embodiment of the invention;
FIG. 9 is a block diagram of a decoding process in accordance with one or more embodiments of the invention;
FIG. 10 is a block diagram of a decoding process in accordance with one or more embodiments of the invention;
FIG. 11 is a block diagram of an encoding or decoding device in which one or more embodiments of the invention can be implemented;
FIG. 12 is a block diagram of an example of a data communication system in which one or more embodiments of the invention can be implemented;
FIG. 13 is a block diagram of an example of a data transmitter system in which one or more embodiments of the invention can be implemented; and
FIG. 14 is a block diagram of an example of a data receiver system in which one or more embodiments of the invention can be implemented.

DETAILED DESCRIPTION

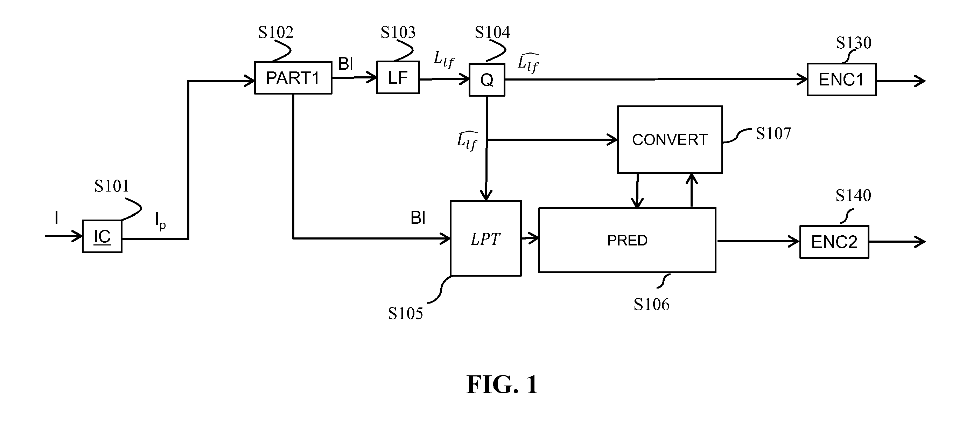

Figure 1 is a schematic block diagram illustrating steps of a method for encoding at least part of an image I in accordance with a first embodiment of the invention. Encoding steps of the method of Figure 1 are generally based on the HEVC compression standard applicable to LDR type images but it will be appreciated that embodiments of the invention may be applied to other encoding standards applicable to LDR type images such as, for example H.264/AVC, MPEG2 or MPEG4.

The method begins with the acquisition of HDR image data. The HDR image data may be representative of a video sequence of images, an image or part of an image. For the purposes of simplifying the description which follows, the acquired image data corresponds to an HDR image. The HDR image data may be acquired directly from an imaging device such as a video camera, acquired from a memory device located locally or remotely on which it is stored, or received via a wireless or wired transmission line.

As used herein the term "HDR image" refers to any HDR image that comprises high dynamic range data in floating point (float or half float), fixed point or long representation integer format typically represented in by a number of bits greater than 16. The input HDR image may be defined in any colour or perceptual space. For example, in the present embodiment the input HDR image is defined in an RGB colour space. In another embodiment the input HDR image may be defined in another colour space such as YUV or any perceptual space. The input HDR image may also be defined in a linear or non-linear representation, for example the logarithmic representation issued from a gamma correction/transformation.

Generally, the encoding steps of the process are performed on an image including data representative of the luminance of pixels of the image. Such image data includes a luminance component L and potentially at least one colour or chroma component $C(i)$ where i is an index identifying a colour or chroma component of the image. The components of the image define a colour space, usually a 3D space, for example the image may be defined in a colour perceptual space comprising a luminance component L and potentially two colour components C1 and C2.

It will be appreciated, however, that the invention is not restricted to a HDR image having colour components. For example, the HDR image may be a grey image in a perceptual space having a luminance component without any colour component.

A perceptual space is defined as a colour space defined by a plurality of components including a luminance component and has a colour difference metric $d((L, C1, C2), (L', C1', C2'))$ whose values are representative of, preferably proportional to, the respective differences between the visual perceptions of two points of said perceptual space.

Mathematically speaking, the colour difference metric $d((L, C1, C2), (L', C1', C2'))$ is defined such that a perceptual threshold $\Delta E_0$ (also referred to as JND, Just Noticeable Difference) exists, below which a human eye is unable to perceive a visual difference between two colours of the perceptual space, i.e.

$$d\big((L, C1, C2), (L', C1', C2')\big) < \Delta E_0, \qquad (1)$$

The perceptual threshold $\Delta E_0$ is independent of the two points *(L, C1, C2)* and *(L', C1', C2')* of the perceptual space. Thus, encoding an image whose components belong to a perceptual space such that the metric of equation (1) remains below the bound $\Delta E_0$ ensures that displayed decoded version of the image is visually lossless.

When the acquired image I comprises components belonging to a non-perceptual space such as for example (R,G,B), a perceptual transform is applied to the image data I in step S101 by an image conversion module IC in order to obtain a HDR image $I_p$ having a luminance component L and potentially at least one colour component defining a perceptual space, for example a luminance component L and two colour components C1 and C2.

The perceptual transform performed depends on the lighting conditions of the display and on the initial colour space. For example, assuming the initial colour space is a (R,G,B) colour space, the image I is first transformed into the well-known linear space (X, Y, Z). This step includes performing linearization of the data, where appropriate, by applying an inverse gamma correction and then transforming the linear RGB space data into the XYZ space with a 3x3 transform matrix. For this step, data characterizing the visual environment of the image is used. For example a 3D vector of values $(X_n, Y_n, Z_n)$ defining reference lighting conditions of the display in the (X,Y,Z) space may be used.

As an example, a perceptual transform is defined as follows in the case where the perceptual space LabCIE1976 is selected:

$$L^* = 116 f(Y/Y_n) - 16$$

$$a^* = 500\big(f(X/X_n) - f(Y/Y_n)\big)$$

$$b^* = 200\big(f(Y/Y_n) - f(Z/Z_n)\big)$$

where f is a gamma correction function for example given by:

$$f(r) = r^{1/3} \quad if\ r > (6/29)^3$$

$$f(r) = \frac{1}{3} * \left(\frac{29}{6}\right)^2 * r + \frac{4}{29}$$

otherwise

Two colours are humanly distinguishable from one another in the reference lighting conditions $(X_n, Y_n, Z_n)$ when the following colour difference metric defined on the perceptual space LabCIE1976 is satisfied:

$$d\big((L^*, a^*, b^*), (L^{*\prime}, a^{*\prime}, b^{*\prime})\big)^2 = (\Delta L^*)^2 + (\Delta a^*)^2 + (\Delta b^*)^2 < (\Delta E_0)^2$$

with $\Delta L^*$ being the difference between the luminance components of the two colours ($L^*$, $a^*$, $b^*$) and ($L^{*\prime}$, $a^{*\prime}$, $b^{*\prime}$) and $\Delta a^*$ (respectively $\Delta b^*$) being the difference between the colour components of the two colours. Typically $\Delta E_0$ has a value of between 1 and 2.

The image in the space (X,Y,Z) may, in some cases, be inverse transformed to obtain the estimate of the decoded image in the initial space such as, in the present example, (R,G,B) space. The corresponding inverse perceptual transform is given by:

$$X = X_n f^{-1}\left(\frac{1}{116}(L^* + 16) + \frac{1}{500}a^*\right)$$

$$Y = Y_n f^{-1}\big(1/116(L^* + 16)\big)$$

$$Z = Z_n f^{-1}\left(\frac{1}{116}(L^* + 16) + \frac{1}{200}b^*\right)$$

According to another example, when the perceptual space $Lu^*v^*$ is selected, a perceptual transform may be defined as follows:

$$u^* = 13L(u' - u'_{white}) \text{ and } v^* = 13L(v' - v'_{white})$$

where the following are defined:

$$u' = \frac{4X}{X+15Y+3Z}, \quad v' = \frac{9Y}{X+15Y+3Z},$$

and

$$u'_{white} = \frac{4X_n}{X_n + 15Y_n + 3Z_n} \, , \, v'_{white} = \frac{9Y_n}{X_n + 15Y_n + 3Z_n}.$$

The following Euclidean metric may be defined on the perceptual space *Lu\*v\**:

$$d\left(\left(L\,, u^*, v^*\right), (L', u^{*\prime}, v^{*\prime})\right)^2 = (\Delta L)^2 + (\Delta u^*)^2 + (\Delta v^*)^2$$

with $\Delta L^*$ being the difference between the luminance components of the two colours (*L*, *u\**, *v\**) and (*L'*,*u\*'*,*v\*'*), and $\Delta u^*$ (respectively $\Delta v^*$) being the difference between the colour components of these two colours.
The corresponding inverse perceptual transform for the Luv space is given by:

$$X = \frac{9Yu'}{4v'}$$

$$Y = Y_n f^{-1}\left(\frac{1}{116}(L^* + 16)\right)$$

$$Z = \frac{3Y(4 - u')}{4v'} - 5Y$$

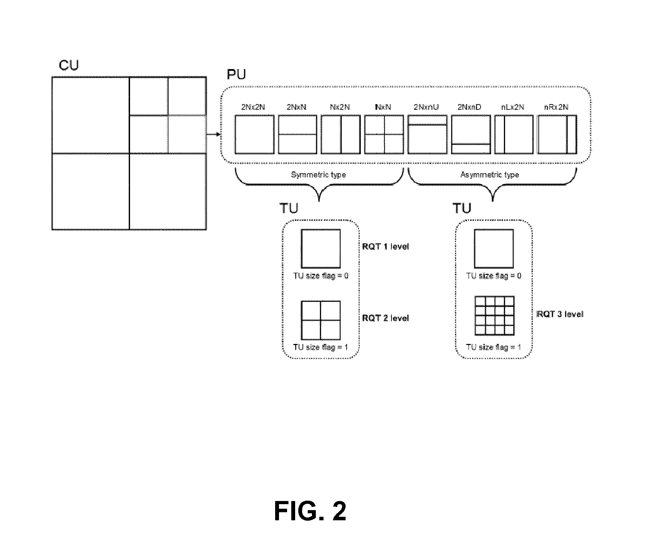

It will be appreciated that the present invention is not limited to the perceptual space LabCIE1976 but may be extended to any type of perceptual space such as the LabCIE1994, LabCIE2000, which are the same Lab space but with a different metric to measure the perceptual distance, or to any other Euclidean perceptual space for instance.
Other examples are LMS spaces and IPT spaces. In such perceptual spaces the metric is defined such that it is preferably proportional to the perception difference; as a consequence, a homogeneous maximal perceptual threshold $\Delta E_0$ exists below which a human being is not able to perceive a visual difference between two colours of the perceptual space.
In step S102 the image is spatially decomposed into a series of spatial units, by a partitioning module PART1. An example of spatial coding structures in accordance with a HEVC video compression technique in encoding of images is illustrated in Figure 2. In the case of a HEVC type encoder the largest spatial unit is referred to as a coding tree unit (CTU). Each spatial unit is decomposed into further elements according to a decomposition configuration, indicated by coding parameters, often referred to as a quad-tree. Each leaf of the quad-tree is called a coding unit (CU), and is further partitioned into one or more sub-elements referred to as prediction units (PU), the samples of which share common prediction parameters, and into transform units (TU) which define the processing segment size.
In step S102 of the example of Figure 1 a coding unit is partitioned into one or more sub-elements or blocks BI which in the present example correspond to Prediction units (PU) for prediction based encoding in accordance with embodiments of the invention.

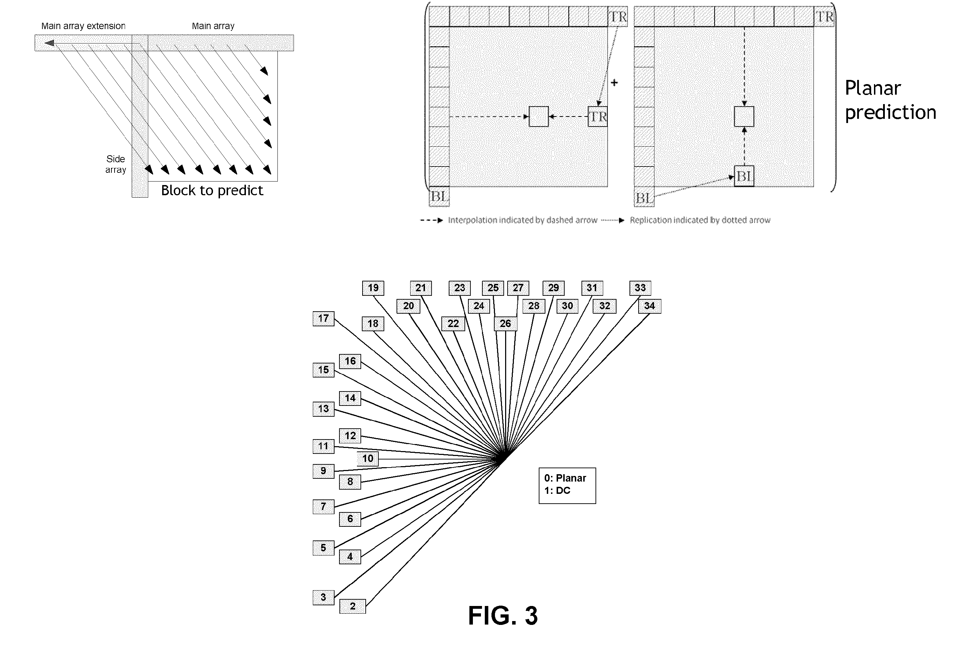

Figure 3 illustrates examples of spatial prediction methods applied in the HEVC standard. In prediction based encoding or decoding methods a spatial block to be reconstructed is predicted from a reference sample typically referred to as a predictor. The predictor may be located in the same frame as the block to be predicted as in the case of Intra prediction or in a different frame of a sequence of frames, in the case of Inter prediction. In the case of intra prediction the predictors are indicated by a prediction mode, which can corresponds to a directional mode or to a non-directional mode. In the case of inter prediction the predictors can be indicated by prediction type (uni- or bi-prediction), frame indices and motion vectors. Prediction encoding or decoding produces better results if the reconstructed samples used in predicting the block correlate well with the samples of the block to be predicted.
While in the present example the output block BI of step S102 is a PU, it will be appreciated that in other embodiments of the invention in which a HEVC type technique is applied the output of step S102 may be a CU or a TU. In other embodiments the block BI will refer to a suitable spatial region of the image being encoded.
In the present example each Prediction Unit or block BI corresponds to a square or rectangular spatial region of the image associated with respective prediction (Intra or Inter) parameters:

Encoding parameters for encoding of the blocks may include one or more of the following coding parameters:

- the coding tree unit organization in terms of coding quad-tree, prediction units and transform units.
- the coding mode (INTRA or INTER) assigned to coding units of the coding tree, where INTER indicates inter-picture (temporal) prediction and INTRA indicates intra-picture (spatial) prediction
- the intra prediction mode (DC, planar or angular direction) for each Intra coding unit in the considered coding tree.
- the inter prediction mode (uni-prediction, bi-prediction, skip) for each Inter coding unit in the considered coding tree.
- the inter prediction parameters in case of inter coding units: motion vectors, reference picture indices, etc.

In step S103 each prediction unit or block is attributed a luminance component value, referred to as a low spatial frequency luminance component $L_{lf}$ representative of the mean of the luminance values of the samples (a sample may comprise one or more pixels) making up that prediction unit or block. This is performed by a luminance processing module LF. Calculating a low spatial frequency luminance component for a block basically involves down-sampling the luminance components of the original image. It will be appreciated that the invention is not limited to any specific embodiment for obtaining a low-spatial-frequency version for each prediction unit or block and that any low-pass filtering or down-sampling of the luminance component of the image $I_p$ may be used. In step S104 the low-spatial frequency luminance component is quantized by a quantization unit Q to provide a quantized low-spatial frequency luminance component $\hat{L}_{lf} = Q(L_{lf})$. Entropy coding is performed by an entropy encoder ENC1 in step S130 on the quantized low-spatial frequency luminance component $\hat{L}_{lf}$ for the output video bitstream. Encoding of the low spatial frequency luminance component may be referred to herein as a first layer of coding or luminance layer.

Based on the respective value of the quantized low-spatial frequency luminance component $\hat{L}_{lf}$, the values of the luminance and colour components of the prediction unit or block are transformed in step S105 by a local perceptual transform unit LPT into a local perceptual space corresponding to the perceptual space transformation of step S101. This perceptual space in the present example is the perceptual space L*a*b*. The quantized low spatial frequency luminance component $\hat{L}_{lf}$ associated with the block is used as the reference lighting conditions of the display for the transformation. The luminance and colour components of this local perceptual space L*a*b* of the block are noted $(L^*_{local}, a^*_{local}, b^*_{local})$. In practice, the transformation into the local perceptual space depends on the quantized low-spatial frequency luminance component $\hat{L}_{lf}$ and the maximum error threshold $\Delta E$ targeted in the encoding process in the local perceptual space.

The transformation into the local perceptual space $\left( L^*_{local}, a^*_{local}, b^*_{local} \right)$. includes the following steps. The luminance signal is first transformed into a so-called local LDR representation, through the following luminance residual computation:

$$L_r = L - \hat{L}_{lf}$$

Where $L_r$ represents the computed residual luminance component, L represents the corresponding luminance component in the original image, and $\hat{L}_{lf}$ represents the quantized low spatial frequency luminance component.

This step may be referred to herein as the LDR localization step.

Then the residual luminance component $L_r$ is represented in a local perceptual space as follows. Assuming a nominal lighting luminance $Y_n$, in the L*a*b* perceptual space mode, a change in lighting conditions by a factor $Y_E$ transforms the perceptual space components as follows:

$$(X_n, Y_n, Z_n) \rightarrow (Y_E X_n, Y_E Y_n, Y_E Z_n)$$

Accordingly, this results in a modified perceptual threshold corresponding to:

$$\Delta E'_0 = \Delta E_0 . Y_E^{(1/3)}$$

Consequently, the perceptual threshold $\Delta E'_0$ is adapted to the coding according to the maximum lighting change multiplicative factor in post-processing. The new threshold $\Delta E'_0$ is derived from the $Y_E$ factor, where $Y_E = Y_{lf}/Y_n$, the relationship between $Y_{lf}$ and $\hat{L}_{lf}$ being given by:

$$\widehat{L_{lf}} = 116 \ Y_{lf}^{\ (1/3)} - 16.$$

In this way the perceptual space is localized since it is based on the low-spatial frequency luminance component $\hat{L}_{lf}$ associated with the current prediction unit.

The localization of the perceptual space takes the following form in practice, in the embodiment that corresponds to the LabCIE76 perceptual space:

$$L^*_{local} = \frac{L_r}{\Delta E} = \frac{L_r}{\Delta E_0 (Y_E)^{1/3}} = \frac{L_r . 116}{\hat{L}_{lf} . \Delta E_0}$$

With respect to the color components a* and b*, no LDR localization is needed. The localization of the perceptual space involves the following transformation:

$$a^*_{local} = \frac{a^*}{\Delta E} = \frac{a^*}{\Delta E_0 (Y_E)^{1/3}} = \frac{a^* . 116}{\hat{L}_{lf} . \Delta E_0}$$

$$b^*_{local} = \frac{b^*}{\Delta E} = \frac{b^*}{\Delta E_0 (Y_E)^{1/3}} = \frac{b^* . 116}{\hat{L}_{lf} . \Delta E_0}$$

The residual texture data to be coded in each prediction unit is thus represented in a local perceptual space $(L^*_{local}, a^*_{local}, b^*_{local})$.

In step S106 an encoding process applicable to LDR image data is then applied. The encoding process includes defining for each prediction unit or coding unit one or more transform units (TU) or Prediction Units (PU) to which prediction processes will be applied to predict the transform unit from reference samples, typically referred to as predictors. In the case of an intra coding unit, for example, each transform unit of the coding unit is spatially predicted from samples of neighbouring TUs which have been previously coded and reconstructed. Processes in accordance with embodiments of the invention for providing reference samples for the prediction processes are applied in step S107. In step S107 reference samples for prediction of the current TU or PU to be encoded are transformed into local LDR space of the current TU or PU being processed. The prediction of the current TU or PU using the locally-LDR-space transformed samples is applied in the LDR encoding process of step S106. In the LDR encoding process, the residual texture associated with a current TU or PU is determined, transformed and quantized for entropy coding by entropy encoder ENC2 in step S140. Encoding of the texture residual may be referred to herein as a second layer of coding. While this particular embodiment of the invention is described for a current TU, it will be appreciated that it may also apply to a current PU, and can be extended for the inter mode coding case.

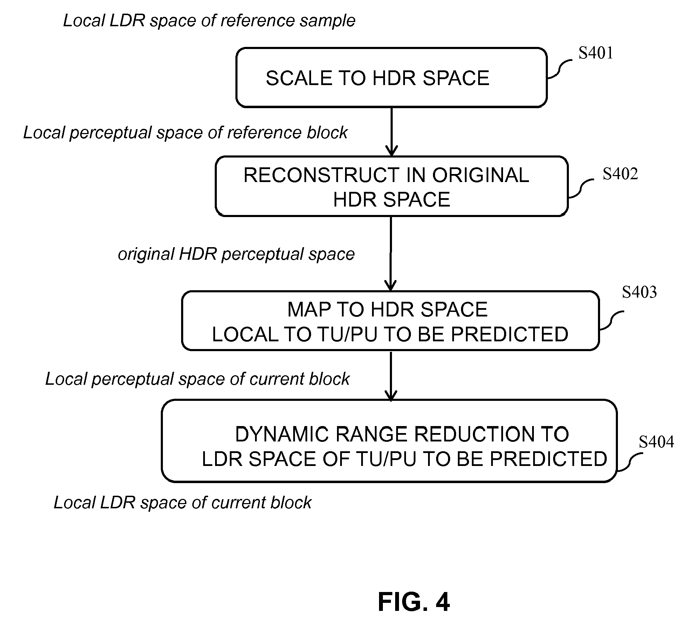

The mechanism of providing reference samples in accordance with embodiments of the invention for spatial and temporal prediction applied in the encoding process comprises four main steps as set out in Figure 4. In the process reference data of the predictors are converted for the prediction process into the local LDR space of the block to be predicted. This process applies in the same way at the encoder and at the decoder sides.

In step S401 luminance and chroma components $(L^{rec}_{LDR}, a^{rec}_{LDR}, b^{rec}_{LDR})$ of samples of TUs (or PUs) previously reconstructed in their local LDR space, and indicated by the prediction parameters for the spatial prediction of the current TU or identified by virtue of the inter coding parameters from the previously coded pictures for the temporal prediction of the current PU, are scaled into corresponding components $\left(L_l^{rec}, a_l^{rec}, b_l^{rec}\right)$ in their local perceptual LDR space:

$$\left(L_{LDR}^{rec}, a_{LDR}^{rec}, b_{LDR}^{rec}\right) \rightarrow \left(L_l^{rec}, a_l^{rec}, b_l^{rec}\right)$$

In spatial intra prediction the reference samples for prediction of the block typically neighbor the block to be predicted.

The conversion or normalization step S401 involves a scaling process and is mathematically represented as:

$$L_l^{rec} = (Float)\left(\frac{L_{LDR}^{rec}}{LDRSCALING}\right)$$

where:

- $L_{LDR}^{rec}$ represents the luminance component of the reconstructed LDR reference sample in its local LDR space
- *LDRSCALING* represents a constant integer for fixing the dynamic range of the samples at the input of the LDR coding layer;
  LDRSCALING is chosen so that, when multiple by the bound representing the maximum LDR signal value, the maximum value support by the in-place LDR codec used is reached. For instance, if the LDR codec used works over 10 bits, then this product must be equal to $2^9 = 512$ (the most significant bit being used for the sign).
- $L_l^{rec}$ represents a luminance sample reconstructed in the local perceptual Lab space associated with the reference TU or PU used for the prediction of the current TU or PU (for example a sample of a neighbouring TU in the case of spatial prediction, or a sample of a PU identified by a motion vector in a reference picture in the case temporal prediction).

In step S402 the rescaled components $\left(L_l^{rec}, a_l^{rec}, b_l^{rec}\right)$ of the previously reconstructed TU or PU samples are then further converted into corresponding components $\left(L^{rec}, a^{rec}, b^{rec}\right)$ in the original HDR space of the image using the quantized low spatial frequency luminance component $\hat{L}_{lf}^{ref}$ associated with the respective reference TU:

$$\left(L_l^{rec}, a_l^{rec}, b_l^{rec}\right) \rightarrow \left(L^{rec}, a^{rec}, b^{rec}\right)$$

In the reconstruction step S402 each reference sample for prediction of a current block is subjected to a reconstruction in the HDR space as a function of the low frequency luminance value $\hat{L}_{lf}$ of the TU in which it is contained. The step is mathematically represented as follows:

$$L^{rec} = L_l^{rec} \cdot \frac{\Delta E_0 . \hat{L}_{lf}^{ref}}{116} + \hat{L}_{lf}^{ref}$$

$$a^{rec} = a_l^{rec} \cdot \frac{\Delta E_0 . \hat{L}_{lf}^{ref}}{116}$$

$$b^{rec} = b_l^{rec} \cdot \frac{\Delta E_0 \cdot \hat{L}_{lf}^{ref}}{116}$$

where:

- $L^{rec}$ represents the reference sample reconstructed in the original HDR space of the images $I_p$ to be compressed;
- $\hat{L}_{lf}^{ref}$ represents the reconstructed low spatial frequency luminance component associated with the reference TU, after inverse quantization.

The set of reference samples reconstructed in this way in the HDR space are then mapped in the local perceptual space associated with the current TU or PU block of the current image being encoded. To achieve this in step S403 the components of the previously reconstructed Tus or PUs converted into the original HDR space, are then converted from the HDR space of the original image to the local perceptual space of the TU or PU to be predicted. The quantized low spatial frequency luminance component $\hat{L}_{lf}$ for the current TU or PU to be predicted is applied in the conversion:

$$(L^{rec}, a^{rec}, b^{rec}) \rightarrow (L_l^{pred}, a_l^{pred}, b_l^{pred})$$

This process is mathematically represented as follows:

$$L_l^{pred} = (L^{rec} - \hat{L}_{lf}) \frac{116}{\Delta E_0 \cdot \hat{L}_{lf}}$$

$$a_l^{pred} = (a^{rec}) \frac{116}{\Delta E_0 \cdot \hat{L}_{lf}}$$

$$b_l^{pred} = (b^{rec}) \frac{116}{\Delta E_0 \cdot \hat{L}_{lf}}$$

where:

- $L_l^{pred}$ represents the reference sample transformed in the local perceptual space of the current TU or PU to be predicted;

In step S404 the data in the local perceptual space is then scaled back into the local LDR space used for the encoding of the current TU or PU:

$$(L_l^{pred}, a_l^{pred}, b_l^{pred}) \rightarrow (L_{LDR}^{pred}, a_{LDR}^{pred}, b_{LDR}^{pred})$$

This process is mathematically represented as follows:

$$L_{LDR}^{pred} = \left\lfloor \left( \max\left(-Bound_{LDR}, \min\left(Bound_{LDR}, L_l^{pred}\right)\right) \times LDRSCALING + 0.5. sign(L_l^{pred}) \right) \right\rfloor$$

where:

- $Bound_{LDR}$ x *LDRSCALING* represents the absolute value of the dynamic of the image samples processed by the codec of the LDR layer
- the operator ⌊x⌋ represent the integer value closest to x, with an absolute value equal or lower than that of x.

The advantage of the proposed mechanism is that the sample components transformed into the local LDR space of the TU or PU to be predicted are better correlated with the content of the TU or PU to be predicted thus improving the efficiency and accuracy of the prediction leading to better compression of the data.

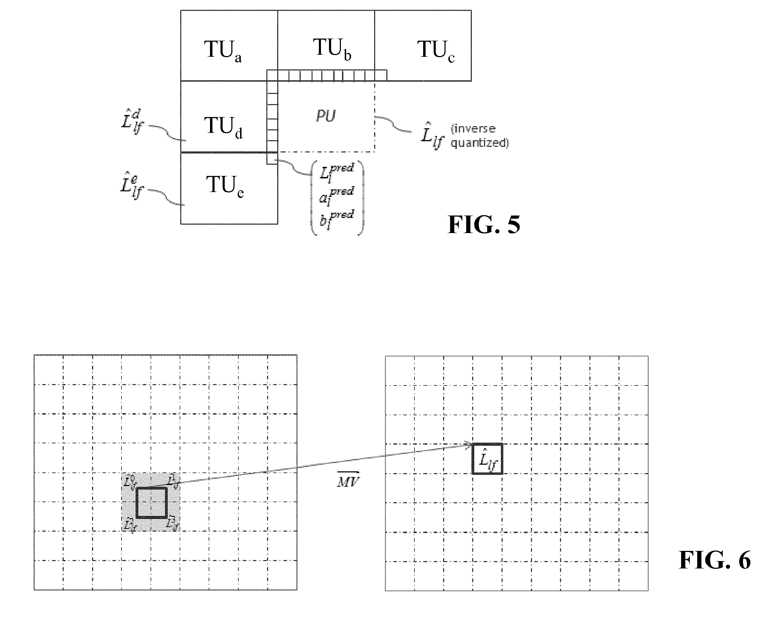

Figure 5 schematically illustrates an example of the implementation of the conversion of samples between local LDR and HDR spaces in the case of Intra spatial prediction. The reference samples to be used for prediction of the current TU are determined from the intra prediction mode (DC, planar or angular direction). In the illustrated example the TU to be predicted 500 is predicted from previously reconstructed boundary samples of TUs neighbouring the TU to be predicted. In the illustrated example, samples of reconstructed TUs: TUa to TUe located at boundaries generally above and to the left of the TU 500 to be predicted are used to predict the texture of that TU. Each of the reconstructed TUs has an associated low frequency luminance value $\hat{L}_{lfa}$, $\hat{L}_{lfb}$, $\hat{L}_{lfc}$, $\hat{L}_{lfd}$ $\hat{L}_{lfe}$. Each of the reference samples used for prediction of the current TU is subjected to the transformation process of Figure 4.

Figure 6 schematically illustrates an example of the implementation of the conversion of samples between local LDR and HDR spaces in the case of temporal prediction. In the case of temporal prediction a current TU or PU block of the current image is linked by a motion vector $\overrightarrow{MV}$ to a reference block in a reference image. In the illustrated example, the reference block is intersected by one or more blocks of the reference image. Each intersecting reference block has its associated low frequency luminance *value* $\hat{L}_{lf}$.

Each reference sample for prediction of a current block is subjected to a reconstruction in the HDR space as a function of the low frequency luminance value $\hat{L}_{lf}$ of the TU in which it is contained. The set of reference samples reconstructed in this way in the HDR space are then mapped in the local perceptual space associated with the TU block of the current image being encoded.

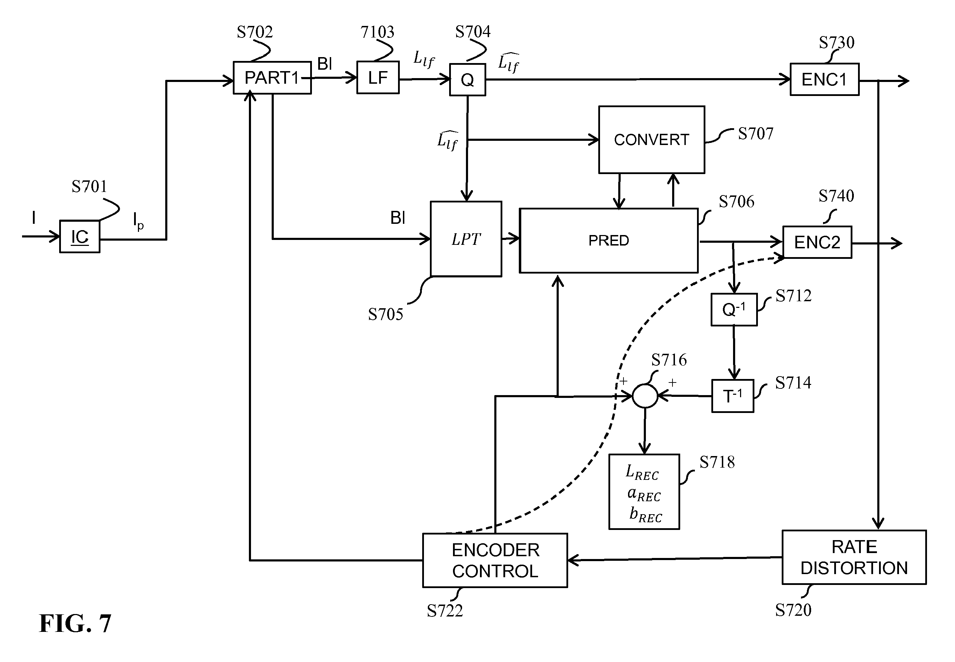

Figure 7 is a schematic block diagram illustrating steps of a method of encoding at least part of an image according to a further embodiment of the invention. With reference to Figure 7, steps S701 to S707 are similar to corresponding steps S101 to S107 of Figure 1. The process of the embodiment of Figure 7 differs to that of Figure 1 in that it further includes reconstruction of the coding unit to be encoded in the original HDR space and the adjustment of encoding parameters of the encoding process according to a rate distortion cost calculated on the reconstructed coding unit.

After prediction processing in step S706 of the TU or PU to be encoded, the residual texture data to be coded in each prediction unit is thus represented in a local perceptual space $\left(L_{local}^*, a_{local}^*, b_{local}^*\right)$. If a rate-distortion cost was calculated on the basis of the local perceptual space, for the choice of quad tree representation of the CTUs of the HDR image to be encoded, an inconsistency would be likely to arise. For example, supposing that for a given CU at a given quad tree level the partitioning unit of the encoder has to choose between two types of prediction units 2Nx2N and NxN the comparison between the corresponding rate-distortion costs would be as follows:

$$D(CU_{level}, 2Nx2N) + \lambda R(CU_{level}, 2Nx2N) \leqq \sum_{i=1}^{4} D\left(PU_{level}^i, NxN\right) + \lambda R\left(PU_{level}^i, NxN\right)$$

i.e:

$$D(CU_{level}, 2Nx2N) + \lambda R(CU_{level}, 2Nx2N) \leqq \sum_{i=1}^{4} D\left(PU_{level}^i, NxN\right) + \lambda \sum_{i=1}^{4} R\left(PU_{level}^i, NxN\right)$$

In the term on the right it can be seen that an addition is performed on the calculated distortions for PUs represented in different colour spaces. This can lead to inconsistencies.

In order to address such a problem, in the embodiment of Figure 7 the rate-distortion cost associated with a spatial entity of the image is considered in the original HDR space rather than in the local LDR perceptual space. In this way rate-distortion costs corresponding to different image blocks of the image are comparable since they have been calculated in the same perceptual space. A step of reconstructing the coding unit in the HDR space is thus included in the encoding process of the embodiment of Figure 7. Reconstruction of a coding unit in the HDR space is carried out as follows.

Each TU or PU of the coding unit is reconstructed by performing inverse quantization in step S712 inverse transformation in step S714 and prediction addition in step S716. The reconstructed TU is then obtained in the original HDR space in step S718.

For the step S718 of reconstructing the residual TU or PU in the HDR space for which the local colour space in a particular embodiment of the invention is Lab 76, the following equations may be applied. The equations correspond respectively to the reconstruction of the decoded pixels of the TU in the HDR space for the luminance component L and the chrominance components a, b:

$$1. \quad L_l^{rec} = (Float)\left(\frac{L_{LDR}^{rec}}{LDRSCALING}\right)$$

$$2. \quad L_{HDR}^{rec} = L_l^{rec}.\frac{\Delta E_0.\hat{L}_{lf}}{116} + \hat{L}_{lf}$$

$$3. \quad a_l^{rec} = (Float)\left(\frac{a_{LDR}^{rec}}{LDRSCALING}\right)$$

$$4. \quad a_{HDR}^{rec} = a_l^{rec}.\frac{\Delta E_0.\hat{L}_{lf}}{116}$$

$$5. \quad b_l^{rec} = (Float)\left(\frac{b_{LDR}^{rec}}{LDRSCALING}\right)$$

$$6. \quad b_{HDR}^{rec} = b_l^{rec}.\frac{\Delta E_0.\hat{L}_{lf}}{116}$$

where :

- $LDRSCALING$ represents a constant integer for fixing the dynamic range of the given pixels at the input of the LDR coding layer;
- $L_l^{rec}, a_l^{rec}, b_l^{rec}$ represent the luminance and chrominance samples reconstructed in the local Lab space associated with the PU containing the sample;
- $L_{HDR}^{rec}, a_{HDR}^{rec}, b_{HDR}^{rec}$ represent the samples reconstructed in the HDR space of the original images $I_p$ to be compressed;
- $\hat{L}_{lf}$ represents the low spatial frequency luminance component associated with the PU, in the reconstructed version after inverse quantization.

The ENCODER CONTROL module manages the strategy used to encode a given coding unit or sub-elements of a coding unit in a current image. To do so, it assigns candidate coding parameters to the current coding unit or coding unit sub-elements. Encoding parameters for encoding of the blocks may include one or more of the following coding parameters:

- the coding tree unit organization in terms of coding quad-tree, prediction units and transform units.
- the coding mode (INTRA or INTER) assigned to coding units of the coding tree, where INTER indicates inter-picture (temporal) prediction and INTRA indicates intra-picture (spatial) prediction
- the intra prediction mode (DC, planar or angular direction) for each Intra coding unit in the considered coding tree.
- the INTER prediction parameters in case of INTER coding units: motion vectors, reference picture indices, etc.

The choice of coding parameters for a coding unit is performed by minimizing a rate-distortion cost as follows:

$$p_{opt} = \mathbf{Argmin}_{p \in P}\{D(p) + \lambda. R(p)\}$$

where p represents the set of candidate coding parameters for a given coding unit and $\lambda$ represents the Lagrange parameter, and $D(p)$ and $R(p)$ respectively represent the distortion and the rate associated with the coding of the current coding unit with the candidate set of coding parameters p.

In embodiments of the invention, the distortion term $D(p)$ represents the coding error obtained in the initial HDR space of the image to be encoded. In general this involves reconstructing a CU or CU sub-elements being processed into the original (L*, a*, b*) space, as will be described in what follows, before calculating the distortion $D(p)$ associated with coding parameter p. Such an approach helps to reduce the appearance of artefacts in the decoded image since the coding unit or sub-element in its original HDR space is considered.

A process for calculating the rate-distortion cost for encoding a coding unit with a set of encoding parameters p, according to one or more embodiments of the invention is set out as follows. In the embodiment of Figure 7 the rate distortion cost process is performed in step S720 by rate distortion module RATE-DIST.

The process is initialized by resetting the rate distortion cost J to 0 : $J \leftarrow 0$

After the low spatial frequency component $L_{lf}(PU)$ has been entropy encoded in step S730 an associated rate $R(L_{lf})$ is determined in step S720 for the entropy encoded low spatial frequency component $L_{lf}(PU)$. The rate-distortion cost J is then updated in accordance with:

$$J \leftarrow J + \lambda. R(L_{lf})$$

where $\lambda$ represents the Lagrange parameter.

An associated rate $R(TU,p)$ is determined in step S720 for the entropy encoded residual texture of step S740.

A distortion for the reconstructed TU in the original HDR space is then calculated as follows:

$$D^{HDR}(TU, p) = \sum_{i=1}^{n \times n}\left(TU_{rec}^{HDR}(i) - TU_{orig}^{HDR}(i)\right)^2,$$

where $TU_{orig}^{HDR}(i)$ corresponds to the sample of the TU in the original HDR image and $TU_{rec}^{HDR}(i)$ corresponds to the sample of the reconstructed TU in the HDR space. The rate distortion cost J of the CU is then updated as follows:

$$J \leftarrow J + D^{HDR}(TU, p) + \lambda. R(TU, p)$$

The rate-distortion cost associated with the encoding of a CU with a coding parameter p can be formulated as follows:

$$D^{HDR}(CU,p) + \lambda\big(R_{LDR}(CU,p) + R(L_{lf},p)\big)$$

where :

- $R_{LDR}(Cu,p)$ is the coding cost of the considered CU in the LDR layer $R(L_{lf},p)$ is the coding cost of the low frequency luminance components associated with the PUs belonging to the CU considered.

In step S722 the encoder control module ENCODER CONTROL adapts the coding parameters of the LDR encoding process based on the rate distortion cost calculated in step S720 for the encoded TU in the HDR space.

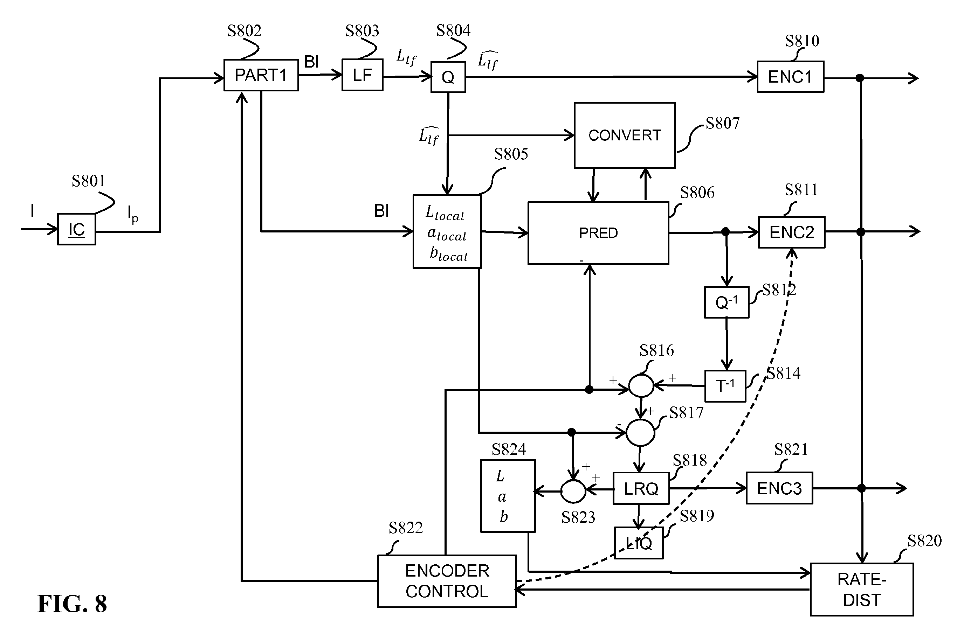

Figure 8 is a schematic block diagram illustrating steps of a method of encoding at least part of an image according to a further embodiment of the invention. With reference to Figure 8, steps S801 to S807 are similar to corresponding steps S101 to S107 of Figure 1. In particular step S807 is implemented to perform conversion on the predictor samples and prediction according to embodiments of the invention. The process of the embodiment of Figure 8 differs to that of Figure 1 and Figure 7 in that it includes a refinement step, typically referred to as quasi-lossless, in which refinement is performed on the texture data reconstructed in the local perceptual space of the PU being processed. The encoding may be referred to as tri-layer encoding since it involves entropy encoding of the low spatial frequency component $L_{lf}$, the entropy encoding of the residual textual data and $L_\infty$ norm entropy encoding. The additional refinement step in the encoding process ensures a distortion based on the $L_\infty$ norm between the original texture data and the texture data reconstructed in the considered local perceptual space (steps S816 to S824). Encoding module ENC3 performs encoding for this encoding layer in step S821.

In each of the described embodiments an encoded bitstream representative of the original HDR image is transmitted to a destination receiving device equipped with a decoding device. Information on the coding parameters used to encode the image data may be transmitted to the decoding device to enable the bitstream representing the HDR image to be decoded and the original HDR image reconstructed. The information representative of the coding parameters may be encoded prior to transmission. For example, in the embodiments of Figure 7 data representative of the coding parameters is provided by the encoder control module and encoded in the bitstream by encoder ENC2. In these examples the parameters are thus encoded in the bitstream corresponding to the second layer of coding (LDR layer).

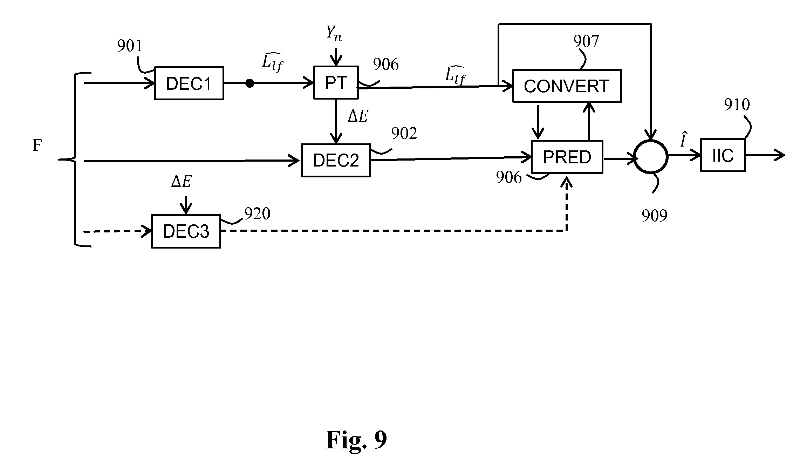

Figure 9 is a schematic block diagram illustrating an example of a decoding process implemented by a decoding device, in accordance with an embodiment of the invention for decoding a bitstream representing an image I. In the decoding process decoders DEC1, DEC2 and DEC3, are configured to decode data which have been encoded by the encoders ENC1, ENC2 and ENC3 respectively.

In the example the bitstream F which represents a HDR image I which comprising a luminance component and potentially at least one colour component. Indeed the component(s) of the image I belong to a perceptual colour space as described above.

In step 901, a decoded version $\widehat{L_{lf}}$ of the low-spatial-frequency version of the luminance component of the image I is obtained by decoding at least partially the bitstream F, by means of a decoder DEC1.

In step 902, a decoded version of the encoded residual textual data is obtained by at least a partial decoding of the bitstream F by means of the decoder DEC2.

In step 907 reference samples for prediction of TUs or of PUs undergo a conversion process in accordance with embodiments of the invention for prediction of the current TU or PU. Each reference sample for prediction of a current block is subjected to a reconstruction in the HDR space as a function of the low frequency luminance value $\hat{L}_{lf}$ of the TU or PU in which it is contained. The set of reference samples reconstructed in this way in the HDR space are then mapped in the local perceptual space associated with the TU or PU block of the current image being decoded before having its dynamic range reduced to the LDR space of the TU or PU block.

The conversion process is identical to the conversion process of S107 of Figure 1. The steps as detailed in Figure 4 are performed to provide converted reference samples for prediction of the current TU or PU. In step 906 prediction of TUs or PUs is performed in accordance with embodiments of the invention. Step 906 is identical to step S106 of the corresponding encoding process. The conversion process of S907 applies in the same way at the encoder and at the decoder sides.

In step 909, the decoded version of residual textual data and the decoded version $\widehat{L_{lf}}$ of the low-spatial-frequency version of the luminance component of the image are associated with each other to obtain a decoded image $\hat{I}$.

In some embodiments of the invention, in which the image data has been encoded in accordance with a tri-layer encoding process such as the process of Figure 8 a third layer of decoding is provided in which decoding is performed by decoder unit DEC3.

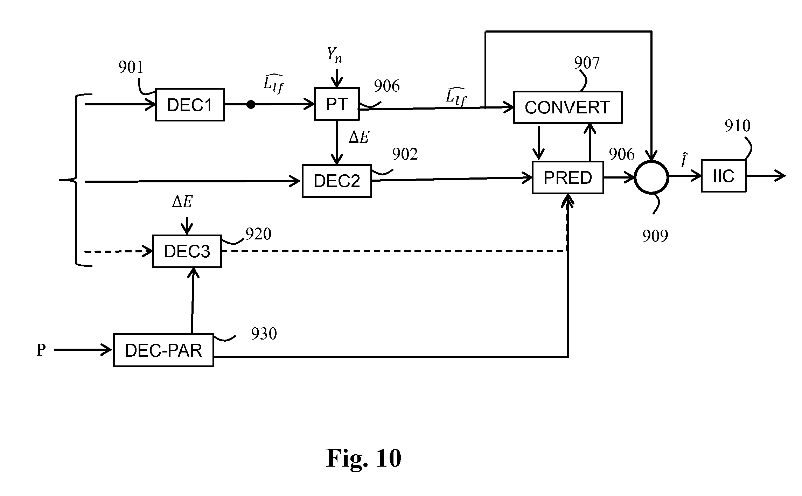

Figure 10 illustrates a decoder according to an embodiment of the invention in which the encoding parameters have been adapted on the basis of a rate-distortion criteria, such as in the encoding example of Figure 7 or 8. Data P representative of the adapted encoding parameters may be received by the decoding device and decoded by a parameter decoder module DEC-PAR in additional step 930. The encoding parameter data P is transmitted in the bitstream with the image data I. The information on the encoding parameters employed is then provided to decoders DEC 1, DEC 2 and DEC 3 so that the encoded image data may be decoded with decoding parameters in accordance with the encoding parameters determined by encoder control module ENCODER CONTROL of the encoder. Steps 901 to 909 are performed in a similar manner to steps 901 to 909 of Figure 9.

The decoding precision of decoder DEC2 depends on a perceptual threshold $\Delta E$ that defines an upper bound of the metric, defined in the perceptual space, which insures a control of the visual losses in a displayed decoded version of the image. The precision of the decoding is thus a function of the perceptual threshold which changes locally.

As previously described, the perceptual threshold $\Delta E$ is determined, according to an embodiment, according to reference lighting conditions of the displaying (the same as those used for encoding) and the decoded version $\widehat{L_{lf}}$ of the low-spatial-frequency version of the luminance component of the image I.

According to an embodiment each component of a residual image has been normalized by means of the perceptual threshold $\Delta E$, the residual image is decoded at a constant precision and each component of the decoded version of the differential image is re-normalized by the help the perceptual threshold $\Delta E$ where

$$\Delta E = \Delta E_0 \cdot \frac{\widehat{L_{lf}}}{116}$$

According to an embodiment the re-normalization is the division by a value which is a function of the perceptual threshold $\Delta E$.

The encoders ENC1, ENC2 and/or ENC3 (and decoders DEC1, DEC2 and/or DEC3) are not limited to a specific encoder (decoder) but when an entropy encoder (decoder) is required, an entropy encoder such as a Huffmann coder, an arithmetic coder or a context adaptive coder like Cabac used in h264/AVC or HEVC is advantageous.

The encoder ENC2 (and decoder DEC2) is not limited to a specific encoder which may be, for example, a lossy image/video coder like JPEG, JPEG2000, MPEG2, h264/AVC or HEVC.

The encoder ENC3 (and decoder DEC3) is not limited to a specific lossless or quasi lossless encoder which may be, for example, an image coder like JPEG lossless, h264/AVC lossless, a trellis based encoder, or an adaptive DPCM like encoder.

According to a variant, in step 910, a module IIC is configured to apply an inverse perceptual transform to the decoded image $\hat{I}$, output of the step 909. For example, the estimate of the decoded image $\hat{I}$ is transformed to the well-known space (X, Y, Z).

When the perceptual space LabCIE1976 is selected, the inverse perceptual transform is given by:

$$X = X_n f^{-1}\left(\frac{1}{116}(L^* + 16) + \frac{1}{500}a^*\right)$$

$$Y = Y_n f^{-1}\left(1/116(L^* + 16)\right)$$

$$Z = Z_n f^{-1}\left(\frac{1}{116}(L^* + 16) + \frac{1}{200}b^*\right)$$

When the perceptual space Luv is selected, the inverse perceptual transform is given by:

$$X = \frac{9Yu'}{4v'}$$

$$Y = Y_n f^{-1}\left(\frac{1}{116}(L^* + 16)\right)$$

$$Z = \frac{3Y(4 - u')}{4v'} - 5Y$$

Potentially, the image in the space (X,Y,Z) is inverse transformed to get the estimate of the decoded image in the initial space such as (R,G,B) space.

In Figures 1, 4 and 7 to 10, the modules are functional units, which may or may not correspond to distinguishable physical units. For example, a plurality of such modules may be associated in a unique component or circuit, or correspond to software functionalities. Moreover, a module may potentially be composed of separate physical entities or software functionalities.

Devices compatible with embodiments of the invention may be implemented either solely by hardware, solely by software or by a combination of hardware and software. In terms of hardware for example dedicated hardware, may be used, such ASIC or FPGA or VLSI, respectively «Application Specific Integrated Circuit », « Field-Programmable Gate Array », « Very Large Scale Integration », or by using several integrated electronic components embedded in a device or from a blend of hardware and software components.

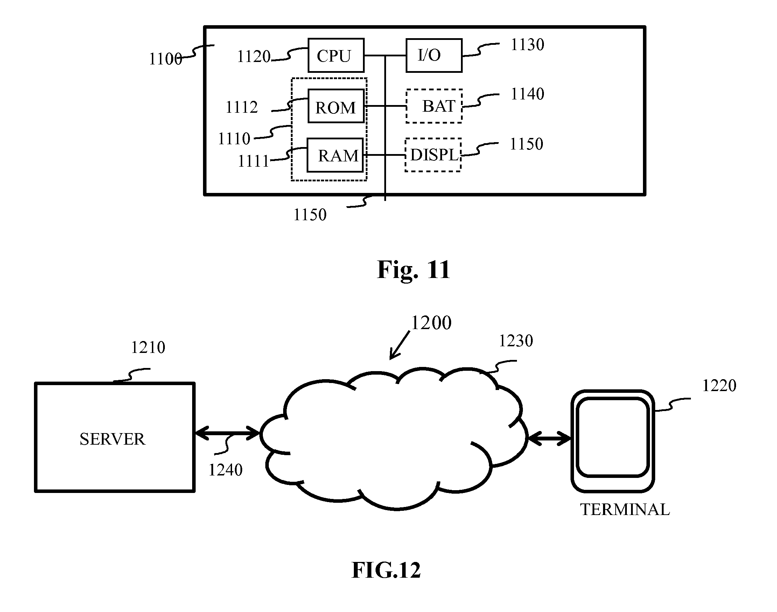

Figure 11 is a schematic block diagram representing functional components of an encoding device or a decoding device 1100 in which one or more embodiments of the invention may be implemented.

The device 1100 includes memory 1110, one or more processing units (CPUs) 1120, an input/output interface 1130 for transfer of data from and to an application. The components communicate over the one or more communication buses 1150.

Memory may include high speed random access memory (RAM) 1111 and read only memory (ROM) 1112. A register of memory may correspond to portion of small capacity (some bits) or to very large capacity portion (e.g at least entire computer program code or large amounts of compressed or uncompressed data) of any of the memories of the device. ROM 1112 stores at least program code and parameters. Algorithms of the methods according to embodiments of the invention may be stored in ROM 1112. When switched on, the CPU 1120 uploads the program in the RAM 1111 and executes the corresponding instructions.

RAM 111 comprises, in a register, the program executed by the CPU 1120 and uploaded after switch on of the device 1100, input data in a register, intermediate data at different states of the algorithm in a register, and other variables used for the execution of the algorithm in a register.

Memory 1100 may include non-volatile memory, such as one or more magnetic disk storage devices, flash memory devices or other non-volatile solid state memory devices. In some embodiments, the memory may further include storage remotely located from the one or more CPUs 1120. For example storage accessible via an interface and/or a communication network.

In some embodiments the device is provided with a power source such as a battery 1140. According to alternative embodiments, the power source may be external to the device.

It will be appreciated that elements of Figure 11 are well-known by those skilled in the art and consequently need not be described in further detail for an understanding of the invention.

According to an embodiment, the device of Figure 11 further comprises means for obtaining reference lighting conditions of the displaying such as a maximal environmental brightness value Yn of the displaying lighting. For example a photosensitive diode or the like.

According to an embodiment, for example in the case of a decoding device, the device of Figure 11 comprises a display 1160 and the means for obtaining reference lighting conditions of the display are configured to determine such reference lighting conditions of the display from some characteristics of the display 1160 or from lighting conditions around the display 1160 which are captured by the apparatus. For instance, the means for obtaining a maximal environmental brightness value Yn of the displaying lighting are a sensor attached to the display and which measures the environmental conditions. A photodiode or the like may be used to this purpose.

The display may in some embodiments of the invention by a touch sensitive display or any other type of display for displaying video data.

FIG. 12 schematically illustrates an example of a data communication system in which one or more embodiments of the invention may be implemented. The data communication system 1200 comprises a transmission device, in this case a server 1210, which is operable to transmit data packets of a data stream to a receiving device, in this case a client terminal 1210, via a data communication network 1230. The data communication network 1230 may be a wireless network or a wired network or a combination of wireless and wired communication links. For example, the data communication link may be Wide Area Network (WAN) or a Local Area Network (LAN). Such a network may be for example a wireless network (Wifi I 802.IIa or b or g), an Ethernet network, an Internet network or a mixed network composed of several different networks. In a particular embodiment of the invention the data communication system may be a broadcast system, such as for example a digital television broadcast system or any other audio visual data supply system in which the server 1210 sends the same data content to multiple clients 1220.

The data stream 1240 provided by the server 1210 comprises encoded data including video data encoded into a bitstream in accordance with embodiments of the invention.

The client 1220 receives the encoded bitstream and decodes the bitstream in accordance with embodiments of the invention to render the multimedia data on the client terminal. The client terminal may be fixed device such as a television or computer or a portable electronic device including, but not limited to a portable computer, a handheld computer, a tablet computer, a mobile telephone, a media player, a personal digital assistance or the like, including a combination of two or more of these items.

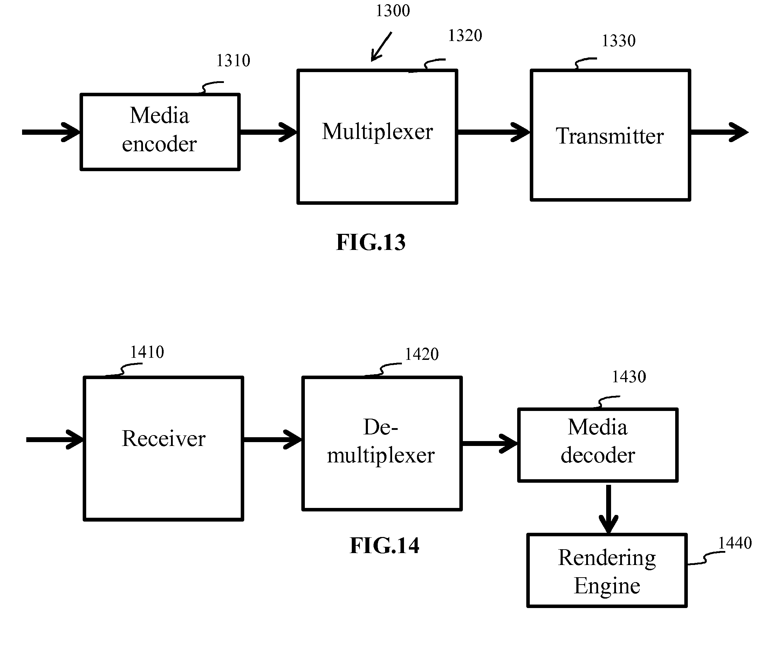

FIG. 13 illustrates an exemplary transmitting system 1300. The input media data, for example, audio and video data including HDR image data, are encoded at media encoder 1310 in accordance with embodiments of the invention. The encoded data is multiplexed at multiplexer 1320, and transmitted at transmitter 1330. The transmitting system may be used in a typical TV broadcast environment, or may be used in any service providing audiovisual data for streaming or downloading.

FIG. 14 illustrates an exemplary receiving system 1400. The input data of system 1400 may be multimedia data encoded in a bitstream, for example, the output of system 1300. The data is received at receiver 1410, de-multiplexed at de-multiplexer 1420, and then decoded at media decoder 1430 by applying decoding methods in accordance with embodiments of the invention. Decoded packets can be placed in a buffer of de-multiplexer 1420. Rendering Engine 1440 renders the media content, for example to display HDR images

The devices 1300 and 1400 may be configured to have access to information on the reference lighting conditions of the display such as a maximal environmental brightness value Yn of the display lighting for encoding and decoding of HDR image data in accordance with the embodiments of the invention.

For example, the devices 1300 and 1400 store the same reference lighting conditions of the display such as a maximal environmental brightness value Yn of the display lighting.

Alternatively, the device 1400 is configured to obtain the reference lighting conditions of the display such as a maximal environmental brightness value Yn of the display lighting and to send it to the device 1300. The device 1300 is then configured to receive transmitted reference lighting conditions of the display such as a maximal brightness value Yn of the display lighting.

Inversely, the device 1300 is configured to obtain the reference lighting conditions of the display such as maximal environmental brightness value Yn of the displaying lighting, for example from a storage memory, and to send it to the device 1400. The device 1400 is then configured to receive such a transmitted reference lighting conditions of the display such a maximal environmental brightness environmental value Yn of the display lighting.

Embodiments of the invention described herein may be implemented in, for example, a method or process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in an apparatus such as, for example, a processor. The term processor refers to processing devices in general, including, for example, a computer, a microprocessor, an integrated circuit, or a programmable logic device. Processors may also include communication devices, such as, for example, computers, tablets, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, the present description or claims may refer to "determining" various pieces of information. Determining the information may include one or more of, for example, estimating the information, calculating the information, predicting the information, or retrieving the information from memory.

Additionally, the present description or claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

Although the present invention has been described hereinabove with reference to specific embodiments, it will be appreciated that the present invention is not limited to the specific embodiments, and modifications will be apparent to a skilled person in the art which lie within the scope of the present invention.

For instance, while in the foregoing examples an encoding or decoding process based on a HEVC coding process has been described it will be appreciated that the invention is not limited to any specific encoding or decoding process. Other encoding or decoding processes applicable to the encoding of LDR images may be applied in the context of the invention. For example the encoding process and complementary decoding process may be based on other encoding/decoding methods involving some encoding strategy optimization step such as MPEG2, MPEG4, AVC, H.263 and the like.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

## Claims

1. A method of encoding or decoding at least part of a high dynamic range image, the image being defined in a color space of high dynamic range, the method comprising for a segment of the at least part of the image:

   converting reference samples for prediction of the segment into a local LDR space of the segment to be predicted, the reference samples having been previously reconstructed in their associated local LDR space, and
   predicting the segment using the converted reference samples, for encoding or decoding of the segment using an encoding or decoding technique applicable to an LDR image.

2. A method according to claim 1 wherein the conversion of the reference samples comprises:

   scaling of the reference samples from their respective reconstructed LDR space to a local perceptual space of high dynamic range;
   reconstruction of the scaled reference samples in the original HDR space of the image;
   mapping of the reconstructed scaled reference samples to the local perceptual space of the segment to be predicted; and
   reduction of the dynamic range of the converted reference samples to the LDR space used for encoding/decoding of the segment to be predicted.

3. A method according to claim 2 wherein the reconstruction of the scaled samples in the original HDR space is dependent upon common representative luminance components respectively associated with the reference samples.

4. A method according to claim 2 or 3 wherein the mapping of the reconstructed scaled samples to the local HDR space of the segment to be predicted is dependent upon a common representative luminance component value associated with the segment to be predicted.

5. A method according to claim 3 or 4 wherein a said common representative luminance component value for a reference sample is obtained based on the luminance values of the image samples of an image segment to which the reference sample belongs

6. A method according to claim 4 or 5 wherein the common representative luminance component value for the segment to be predicted is obtained based on the luminance values of the image samples of the said segment.

7. A method according to any preceding claim further comprising encoding the segment of the at least part of the image using an encoding process applicable to a low dynamic range (LDR) image by applying a coding parameter set including at least one coding parameter; reconstructing the encoded segment in the space of high dynamic range; evaluating a rate distortion cost for the encoded segment in the space of high dynamic range; and adjusting said coding parameter set for the encoding process of the segment based on the evaluated rate distortion cost.

8. A method according to claim 7 when dependent on claim 6 wherein evaluating the rate distortion cost comprises evaluating the rate associated with encoding of the common representative component value of the segment to be encoded.

9. A method according to claim 8 comprising obtaining for the segment to be predicted at least one local residual luminance component in a local space of low dynamic range, said at least one local residual luminance component corresponding to the differential between the corresponding luminance component of the original image and the common representative luminance value of the segment.

10. A method according to claim 9 further comprising obtaining for the segment at least one image portion in the local perceptual space, said at least one image portion corresponding to the local residual luminance component or the color component of the image portion, normalized according to the at least one common representative luminance value of the segment.

11. A method according to claim 10 wherein evaluating the rate distortion cost comprises evaluating the rate associated with encoding of the said at least one image portion.

12. A method according to any one of claims 7 to 11 wherein evaluating the rate distortion cost comprises evaluating the distortion associated with reconstruction of the encoded segment in the perceptual space of high dynamic range.

13. A method according to any preceding claim further comprising performing virtual lossless refinement between samples of the residual image portion reconstructed in the local perceptual space and samples of the original texture and the corresponding samples of the said image.

14. An encoding device for encoding at least part of an image of high dynamic range defined in a perceptual space having a luminance component and a color difference metric, the device comprising:

a reference sample converter for converting reference samples for prediction of the segment into the LDR space of an image segment to be predicted, the reference samples having been previously reconstructed in their associated LDR space, and
a prediction module for predicting the segment using the converted reference samples,
an encoder for encoding the segment using an encoding technique applicable to an LDR image.

15. A decoding device for decoding at least part of an image of high dynamic range defined in a perceptual space having a luminance component and a color difference metric, the device comprising:

a decoder for decoding an image segment using an decoding technique applicable to an LDR image.
a reference sample converter for converting reference samples for prediction of the segment into the LDR space of the segment to be predicted, the reference samples having been previously reconstructed in their associated LDR space, and
a prediction module for predicting the segment using the converted reference samples.

16. An encoding device according to claim 14 or a decoding device according to claim 15 wherein the reference sample converter is configured to
scale the reference samples from their respective reconstructed LDR space to a local perceptual space of high dynamic range;
reconstruct the scaled reference samples in the original HDR space of the image;
map the reconstructed scaled reference samples to the local perceptual space of the segment to be predicted; and
reduce the dynamic range of the converted reference samples to the LDR space used for encoding/decoding of the segment to be predicted.

17. A computer program product for a programmable apparatus, the computer program product comprising a sequence of instructions for implementing a method according to any one of claims 1 to 13 when loaded into and executed by the programmable apparatus.

FIG. 1

FIG. 2

EP 2 961 168 A1

Main array extension          Main array

Side
array

Block to predict

Planar
prediction

- - -► Interpolation indicated by dashed arrow ········► Replication indicated by dotted arrow

0: Planar
1: DC

**FIG. 3**

*Local LDR space of reference sample*

```
┌─────────────────────────────┐
│     SCALE TO HDR SPACE      │  S401
└─────────────────────────────┘
              │
```

*Local perceptual space of reference block*

```
              ▼
┌─────────────────────────────┐
│   RECONSTRUCT IN ORIGINAL   │  S402
│          HDR SPACE          │
└─────────────────────────────┘
              │
```

*original HDR perceptual space*

```
              ▼
┌─────────────────────────────┐
│       MAP TO HDR SPACE      │  S403
│  LOCAL TO TU/PU TO BE PREDICTED │
└─────────────────────────────┘
              │
```

*Local perceptual space of current block*

```
              ▼
┌─────────────────────────────┐
│  DYNAMIC RANGE REDUCTION TO │  S404
│ LDR SPACE OF TU/PU TO BE PREDICTED │
└─────────────────────────────┘
```

*Local LDR space of current block*

**FIG. 4**

EP 2 961 168 A1

$\hat{L}_{lf}^d$  TU$_a$  TU$_b$  TU$_c$

TU$_d$  PU  $\hat{L}_{lf}$ (inverse quantized)

$\hat{L}_{lf}^e$  TU$_e$  $\begin{pmatrix} L_l^{pred} \\ a_l^{pred} \\ b_l^{pred} \end{pmatrix}$

**FIG. 5**

$\hat{L}_{lf}^0$  $\hat{L}_{lf}^1$  $\overline{MV}$  $\hat{L}_{lf}$

$\hat{L}_{lf}^2$  $\hat{L}_{lf}^3$

**FIG. 6**

FIG. 7

FIG. 8

Fig. 9

EP 2 961 168 A1

**Fig. 10**

**Fig. 11**

**FIG.12**

EP 2 961 168 A1

1300

1320

1310

1330

Media
encoder

Multiplexer

Transmitter

**FIG.13**

1410

1420

1430

Receiver

De-
multiplexer

Media
decoder

1440

Rendering
Engine

**FIG.14**

Europäisches
Patentamt

European
Patent Office

Office européen
des brevets

# EUROPEAN SEARCH REPORT

Application Number

EP 14 30 6029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GARBAS J ET AL: "Inter-layer prediction for backwards compatible high dynamic range video coding with SVC", 2012 PICTURE CODING SYMPOSIUM (PCS 2012) : KRAKOW, POLAND, 7 - 9 MAY 2012 ; [PROCEEDINGS], IEEE, PISCATAWAY, NJ, 7 May 2012 (2012-05-07), pages 285-288, XP032449889, DOI: 10.1109/PCS.2012.6213348 ISBN: 978-1-4577-2047-5 | 1,7, 12-15,17 | INV. H04N19/50 H04N19/51 H04N19/593 H04N19/46 H04N19/98 H04N19/186 |
| A | * the whole document * | 2-6, 8-11,16 | |
| | ----- | | |
| X | SEGALL A ET AL: "System for bit-depth scalable coding", 23. JVT MEETING; 80. MPEG MEETING; 21-04-2007 - 27-04-2007; SAN JOSÃ CR ,US; (JOINT VIDEO TEAM OF ISO/IEC JTC1/SC29/WG11 AND ITU-T SG.16 ),, no. JVT-W113, 25 April 2007 (2007-04-25), XP030007073, ISSN: 0000-0153 | 1,7, 12-15,17 | |
| | | | TECHNICAL FIELDS SEARCHED (IPC) |
| A | * the whole document * | 2-6, 8-11,16 | H04N |
| | ----- | | |

The present search report has been drawn up for all claims

| Place of search | Date of completion of the search | Examiner |
|---|---|---|
| Munich | 16 December 2014 | Ernst, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. E. RICHARDSON.** H.264 and MPEG-4 video compression. J. Wiley & Sons, September 2003

- **B. BROSS ; W.J. HAN ; G. J. SULLIVAN ; J.R. OHM ; T. WIEGAND.** High Efficiency Video Coding (HEVC) text specification draft 9. *JCTVC-K1003,* October 2012